# EUROPEAN PATENT SPECIFICATION

(11) **EP 3 214 113 B1**
(45) Date of publication and mention of the grant of the patent: **20.11.2019**
(21) Application number: 15855353.7
(22) Date of filing: 14.10.2015
(51) Int. Cl.: C08J 5/18, B29C 55/02, B29K 45/00, B29L 7/00

(54) **RESIN FILM AND PRODUCTION METHOD FOR RESIN FILM**
HARZFOLIE UND HERSTELLUNGSVERFAHREN FÜR EINE HARZFOLIE
FILM DE RÉSINE ET PROCÉDÉ DE PRODUCTION D'UN FILM DE RÉSINE

(30) Priority: 28.10.2014 JP 2014219382; 25.12.2014 JP 2014263279
(43) Date of publication of application: 06.09.2017
(73) Proprietor: Zeon Corporation, Tokyo 100-8246 (JP)
(72) Inventor: OBUCHI, Kazuyuki, Tokyo 100-8246 (JP); HATANO, Taku, Tokyo 100-8246 (JP); INOUE, Kyosuke, Tokyo 100-8246 (JP); MASHIMA, Hiromu, Tokyo 100-8246 (JP)
(74) Representative: Maiwald Patent- und Rechtsanwaltsgesellschaft mbH
(86) International application number: PCT/JP2015/079037
(87) International publication number: WO 2016/067920

(56) References cited:
- EP-A1- 2 028 222
- WO-A1-2015/002019
- JP-A- 2006 309 266
- JP-A- 2009 166 325
- JP-A- 2013 010 309

## Description

### Field

The present invention relates to a resin film and a method for producing the resin film.

### Background

A technology of crystallizing an alicyclic structure-containing polymer in a film formed from a resin containing an alicyclic structure-containing polymer having crystallizability by heating the film has been known (Patent Literatures 1 and 2). The film formed of the resin containing such an alicyclic structure-containing polymer having crystallizability usually has excellent heat resistance.

On the other hand, a resin film may need to exhibit characteristics, such as folding resistance, low water-absorption property, and heat resistance, for certain uses. Thus, efforts have been made to develop a resin film excellent in these characteristics (see Patent Literature 3). Patent Literatures 4-6 have been additionally cited during examination.

### Citation List

### Patent Literature

Patent Literature 1: Japanese Patent Application Laid-Open No. 2002-194067 A
Patent Literature 2: Japanese Patent Application Laid-Open No. 2013-10309 A
Patent Literature 3: Japanese Patent Application Laid-Open No. 2006-309266 A
Patent Literature 4: European Patent Application No. 2 028 222 A1
Patent Literature 5: Japanese Patent Application Laid-Open No. 2009-16625 A
Patent Literature 6: International Patet Publication WO 2015/002019 A1

### Summary

### Technical Problem

Studies conducted by the present inventor have found that a resin containing an alicyclic structure-containing polymer is usually excellent in low water-absorption property. Further, among resins containing an alicyclic structure-containing polymer, especially, a resin containing an alicyclic structure-containing polymer having crystallizability is usually excellent in heat resistance as described above. However, a prior-art film produced from the resin containing an alicyclic structure-containing polymer having crystallizability is inferior in folding resistance.

The present invention has been made in view of the above-mentioned problem and an object of the present invention is to provide a resin film excellent in all of the folding resistance, the low water-absorption property, and the heat resistance, and a method for producing the resin film.

### Solution to Problem

The present inventor has conducted earnest studies to solve the above-mentioned problem and has found that a resin film excellent in all of the folding resistance, the low water-absorption property, and the heat resistance can be realized by stretching and then heating a film formed of a resin containing an alicyclic structure-containing polymer having crystallizability, thereby completing the present invention.

Specifically, the present invention is as follows.

(1) A resin film formed of a resin containing an alicyclic structure-containing polymer having crystallizability, the resin film having:
   a folding endurance of 2,000 times or more, determined as described in the specification;
   a water-absorption rate of 0.1% or less, determined as described in the specification;
   a heat-resistant temperature of 180°C or higher, determined as described in the specification;
   a crystallinity degree of the alicyclic structure-containing polymer of 10% or more, determined by X-ray diffraction; and
   an absolute value |Δne| of a plane orientation coefficient Δne of 0.01 or more; wherein,
   Δne is represented by a formula "Δne = (nx + ny)/2 - nz", and
   nx represents a refractive index in a direction in which the maximum refractive index is given among in-plane directions perpendicular to a thickness direction of the resin film, ny represents a refractive index in a direction perpendicular to the direction giving nx among the in-plane directions of the resin film, and nz represents a refractive index in the thickness direction of the resin film.
(2) A resin film formed of a resin containing an alicyclic structure-containing polymer having crystallizability, the resin film having:
   a crystallinity degree of the alicyclic structure-containing polymer of 10% or more, determined by X-ray diffraction;
   a folding endurance of 2,000 times or more, determined as described in the specification;
   a water-absorption rate of 0.1% or less, determined as described in the specification;
   a smooth surface, determined as described in the specification; and
   an absolute value |Δne| of a plane orientation coefficient Δne of 0.01 or more; wherein,
   Δne is represented by a formula "Δne = (nx + ny)/2 - nz", and
   nx represents a refractive index in a direction in which the maximum refractive index is given among in-plane directions perpendicular to a thickness direction of the resin film, ny represents a refractive index in a direction perpendicular to the direction giving nx among the in-plane directions of the resin film, and nz represents a refractive index in the thickness direction of the resin film.
(3) A method for producing the resin film according to any one of (1) or (2), comprising:
   a first step of stretching a pre-stretch film formed of a resin containing an alicyclic structure-containing polymer having crystallizability to obtain a stretched film; and
   a second step of heating the stretched film after the first step step to obtain the resin film according to any one of (1) or (2).
(4) The method for producing the resin film according to (3), wherein, in the second step, the stretched film is heated in a strained state where at least two sides of the stretched film are held.

### Advantageous Effects of Invention

The present invention can provide a resin film excellent in all of folding resistance, low water-absorption property, and heat resistance, and can also provide a method for producing the resin film. In particular, the resin film of the present invention has low tendency to cause rupture even it is used under an environment of high temperature and high humidity for a long period of time. In particular, even when a hard layer (electroconductive layer, hard coat layer, etc.) is provided on the resin film of the present invention, occurrence of cracks and rupture of the resin film due to distortion caused by the difference in coefficients of thermal expansion between the resin film and the hard layer can be suppressed. Such a feature is particularly advantageous when the resin film or a laminate containing the resin film is bent for use.

### Brief Description of Drawings

FIG. 1 is a cross-sectional view schematically illustrating a state of a test piece in a determination method for determining whether a resin film is smooth or not.
FIG. 2 is a plan view schematically illustrating a state of the test piece in the determination method for determining whether a resin film is smooth or not.

### Description of Embodiments

The present invention will be described in detail by way of embodiments and examples below. However, the present invention is not limited to the following embodiments and the examples described below, and may be freely modified and practiced without departing from the scope of claims of the present invention and the scope of their equivalents.

In the following description, the "long-length" film refers to a film having a length of five times or more times the width of the film, and preferably ten times or more times the width, and specifically a film having a length long enough to be wound in a roll shape for storage or transportation.

In the following description, the directions of an element being "parallel", "perpendicular", and "orthogonal" may allow errors within the bound of not impairing the effects of the present invention, for example, within a range of ±5°, unless otherwise specified.

### [1. Resin Film]

### [1.1. Overview Of Resin Film]

The resin film of the present invention is a film formed of a resin containing an alicyclic structure-containing polymer having crystallizability, and satisfies either of the following requirements (A) and (B).
Requirement (A): having folding endurance of 2,000 times or more, water-absorption rate of 0.1% or less, and heat-resistant temperature of 180°C or higher.
Requirement (B): having folding endurance of 2,000 times or more, water-absorption rate of 0.1% or less, crystallinity degree of alicyclic structure-containing polymer of 10% or more, and smooth surface.

Further, the resin film of the present invention preferably satisfies both the requirement (A) and the requirement (B).

In the following description, the resin containing an alicyclic structure-containing polymer having crystallizability may be referred to as a "crystallizable resin".

### [1.2. Crystallizable Resin]

The crystallizable resin contains an alicyclic structure-containing polymer having crystallizability. The alicyclic structure-containing polymer herein refers to a polymer having an alicyclic structure in its molecule, and specifically a polymer which is obtainable by a polymerization reaction using a cyclic olefin as a monomer, or a hydrogenated product thereof. The alicyclic structure-containing polymer usually has low water-absorption property. The resin film of the present invention is formed from such a crystallizable resin containing the alicyclic structure-containing polymer and thus can achieve the low water-absorption property.

As the alicyclic structure-containing polymer, one type thereof may be solely used, and two or more types thereof may also be used in combination at any ratio.

Examples of the alicyclic structure contained in the alicyclic structure-containing polymer may include a cycloalkane structure and a cycloalkene structure. Of these, a cycloalkane structure is preferable from the standpoint of easily obtaining a resin film excellent in characteristics such as heat stability. The number of carbon atoms contained in one alicyclic structure is preferably 4 or more, and more preferably 5 or more, and is preferably 30 or less, more preferably 20 or less, and particularly preferably 15 or less. When the number of carbon atoms contained in one alicyclic structure is within the above-mentioned range, mechanical strength, heat resistance, and moldability are exhibited in a highly balanced manner.

In the alicyclic structure-containing polymer, a ratio of a structural unit having the alicyclic structure relative to all structural units is preferably 30% by weight or more, more preferably 50% by weight or more, and particularly preferably 70% by weight or more. When the ratio of the structural unit having the alicyclic structure in the alicyclic structure-containing polymer is increased to the above-mentioned range, heat resistance can be enhanced.

The remaining part in the alicyclic structure-containing polymer, except for the structural unit having the alicyclic structure, is not especially limited, and may be appropriately selected depending on the purposes of use.

The alicyclic structure-containing polymer contained in the crystallizable resin has a crystallizability. The term "alicyclic structure-containing polymer having crystallizability" as used herein refers to an alicyclic structure-containing polymer that has a melting point (i.e., the melting point can be observed with a differential scanning calorimeter (DSC)). The melting point of the alicyclic structure-containing polymer is preferably 200°C or higher, and more preferably 230°C or higher, and is preferably 290°C or lower. The use of the alicyclic structure-containing polymer having such a melting point enables to obtain a resin film that is particularly excellent in the balance of the moldability and the heat resistance.

The weight-average molecular weight (Mw) of the alicyclic structure-containing polymer is preferably 1,000 or more, and more preferably 2,000 or more, and is preferably 1,000,000 or less, and more preferably 500,000 or less. The alicyclic structure-containing polymer having such a weight-average molecular weight is excellent in the balance of molding workability and the heat resistance.

The molecular weight distribution (Mw/Mn) of the alicyclic structure-containing polymer is preferably 1.0 or more, and more preferably 1.5 or more, and is preferably 4.0 or less, and more preferably 3.5 or less. Mn represents a number-average molecular weight. The alicyclic structure-containing polymer having such a molecular weight distribution has excellent molding workability.

The weight-average molecular weight (Mw) and molecular weight distribution (Mw/Mn) of the alicyclic structure-containing polymer may be measured in terms of polystyrene by a gel permeation chromatography (GPC) using tetrahydrofuran as a developing solvent.

The glass transition temperature Tg of the alicyclic structure-containing polymer is not particularly limited, but usually in the range of 85°C or higher and 170°C or lower.

Examples of the alicyclic structure-containing polymer may include the following polymer (α) to polymer (δ). Of these, the polymer (β) is preferable as the alicyclic structure-containing polymer having crystallizability from the standpoint of easily obtaining a resin film excellent in the heat resistance.
Polymer (α): a ring-opened polymer of a cyclic olefin monomer, having crystallizability.
Polymer (β): a hydrogenated product of the polymer (α), having crystallizability.
Polymer (γ): an addition polymer of a cyclic olefin monomer, having crystallizability.
Polymer (δ): a hydrogenated product and the like of the polymer (γ), having crystallizability.

As a specific example of the alicyclic structure-containing polymer, a ring-opened polymer of dicyclopentadiene having crystallizability and a hydrogenated product of the ring-opened polymer of dicyclopentadiene having crystallizability are more preferable, and the hydrogenated product of the ring-opened polymer of dicyclopentadiene having crystallizability is particularly preferable. The ring-opened polymer of dicyclopentadiene described herein refers to a polymer in which the ratio of a structural unit derived from dicyclopentadiene relative to all structural units is usually 50% by weight or more, preferably 70% by weight or more, more preferably 90% by weight or more, and further preferably 100% by weight.

The method for producing the polymer (α) and the polymer (β) will be described below.

The cyclic olefin monomer usable in the production of the polymer (α) and the polymer (β) is a compound which has a ring structure formed by carbon atoms and has a carbon-carbon double bond in the ring. Examples of the cyclic olefin monomer may include a norbornene-based monomer. When the polymer (α) is a copolymer, a cyclic olefin having a monocyclic structure may be used as the cyclic olefin monomer.

The norbornene-based monomer is a monomer containing a norbornene ring. Examples of the norbornene-based monomer may include a bicyclic monomer, such as bicyclo[2.2.1]hept-2-ene (common name: norbornene), and 5-ethylidene-bicyclo[2.2.1]hept-2-ene (common name: ethylidene norbornene) and a derivative thereof (for example, the one having a substituent in the ring); a tricyclic monomer, such as tricyclo[4.3.0.1^{2,5}]deca-3,7-diene (common name: dicyclopentadiene) and a derivative thereof; and a tetracyclic monomer, such as 7,8-benzotricyclo[4.3.0.1^{2,5}]deca-3-ene (common name: methanotetrahydrofluorene: also referred to as 1,4-methano-1,4,4a,9a-tetrahydrofluorene) and a derivative thereof, tetracyclo[4.4.0.1^{2,5}.1^{7,10}]dodeca-3-ene (common name: tetracyclododecene), and 8-ethylidene tetracyclo[4.4.0.1^{2,5}.1^{7,10}]-3-dodecene and a derivative thereof.

Examples of the substituent of the monomer may include an alkyl group, such as a methyl group and an ethyl group; an alkenyl group, such as a vinyl group; an alkylidene group, such as propan-2-ylidene; an aryl group, such as a phenyl group; a hydroxy group; an acid anhydride group; a carboxyl group; and an alkoxycarbonyl group, such as a methoxycarbonyl group. The monomer may have solely one type of the substituent, and may also have two or more types thereof in combination at any ratio.

Examples of the cyclic olefin having a monocyclic structure may include a cyclic monoolefin, such as cyclobutene, cyclopentene, methylcyclopentene, cyclohexene, methylcyclohexene, cycloheptene, and cyclooctene; and a cyclic diolefin, such as cyclohexadiene, methylcyclohexadiene, cyclooctadiene, methylcyclooctadiene, and phenylcyclooctadiene.

As the cyclic olefin monomer, one type thereof may be solely used, and two or more types thereof may also be used in combination at any ratio. When two or more types of the cyclic olefin monomers are used, the polymer (α) may be a block copolymer or a random copolymer.

The cyclic olefin monomer may have a structure with which endo and exo stereoisomers may exist. Any of the endo and exo isomers may be used as the cyclic olefin monomer. Either one of the endo and exo isomers may be solely used, and an isomer mixture containing the endo and exo isomers at any ratio may also be used. In particular, it is preferable that the ratio of one stereoisomer is at a high level relative to the other since the crystallizability of the alicyclic structure-containing polymer is enhanced and a resin film having particularly excellent heat resistance is easily obtained. For example, the ratio of the endo or exo isomer is preferably 80% or more, more preferably 90% or more, and further preferably 95% or more. Further, the ratio of the endo isomer is preferably higher for easy synthesis.

The crystallizability of the polymer (α) and the polymer (β) can be usually improved by increasing the degree of syndiotacticity (ratio of racemo diads) of these polymers. The ratio of racemo diads in the structural unit of the polymer (α) and the polymer (β) is preferably 51% or more, more preferably 60% or more, and particularly preferably 70% or more from the viewpoint of increasing the degree of stereoregularity of the polymer (α) and the polymer (β).

The ratio of racemo diads may be measured by a ¹³C-NMR spectrum analysis. Specifically, the measurement may be performed by the following method.

A polymer sample is subjected to ¹³C-NMR measurement at 200°C by an inverse-gated decoupling method using orthodichlorobenzene-d⁴ as a solvent. From the result of the ¹³C-NMR measurement, the ratio of racemo diads of the polymer sample may be obtained on the basis of an intensity ratio of the signal at 43.35 ppm derived from meso diads and the signal at 43.43 ppm derived from racemo diads using the peak of orthodichlorobenzene-d⁴ at 127.5 ppm as a reference shift.

A ring-opening polymerization catalyst is usually used to synthesize the polymer (α). As the ring-opening polymerization catalyst, one type thereof may be solely used, and two or more types thereof may also be used in combination at any ratio. It is preferable that such a ring-opening polymerization catalyst for synthesis of the polymer (α) is a ring-opening polymerization catalyst which can achieve ring-opening polymerization of the cyclic olefin monomer to produce a ring-opened polymer having syndiotacticity. Preferable examples of the ring-opening polymerization catalyst may include a ring-opening polymerization catalyst including a metal compound represented by the following formula (1):

M(NR¹)X₄₋ₐ(OR²)ₐ·L_{b} (1)

(wherein
M is a metal atom selected from the group consisting of transition metal atoms of Group 6 of the periodic table,
R¹ is a phenyl group optionally having a substituent on at least one of the positions 3, 4, and 5, or a group represented by -CH₂R³ (R³ is a group selected from the group consisting of a hydrogen atom, an alkyl group optionally having a substituent, and an aryl group optionally having a substituent),
R² is a group selected from the group consisting of an alkyl group optionally having a substituent and an aryl group optionally having a substituent,
X is a group selected from the group consisting of a halogen atom, an alkyl group optionally having a substituent, an aryl group optionally having a substituent, and an alkylsilyl group,
L is a neutral electron donor ligand,
a is a number of 0 or 1, and
b is an integer of 0 to 2.)

In the formula (1), M represents a metal atom selected from the group consisting of transition metal atoms of Group 6 of the periodic table. M is preferably chromium, molybdenum, or tungsten, more preferably molybdenum or tungsten, and particularly preferably tungsten.

In the formula (1), R¹ represents a phenyl group optionally having a substituent on at least one of the positions 3, 4, and 5, or a group represented by -CH₂R³.

The number of carbon atoms of the phenyl group optionally having a substituent on at least one of the positions 3, 4, and 5 of R¹ is preferably 6 to 20, and more preferably 6 to 15. Examples of the substituent may include an alkyl group, such as a methyl group and an ethyl group; a halogen atom, such as a fluorine atom, a chlorine atom, and a bromine atom; and an alkoxy group, such as a methoxy group, an ethoxy group, and an isopropoxy group. The group may have solely one type of the substituent, and may also have two or more types thereof in combination at any ratio. In R¹, the substituents present on at least two of the positions 3, 4, and 5 may be bonded to each other to form a ring structure.

Examples of the phenyl group optionally having a substituent on at least one of the positions 3, 4, and 5 may include an unsubstituted phenyl group; a monosubstituted phenyl group, such as a 4-methylphenyl group, a 4-chlorophenyl group, a 3-methoxyphenyl group, a 4-cyclohexylphenyl group, and a 4-methoxyphenyl group; a disubstituted phenyl group, such as a 3,5-dimethylphenyl group, a 3,5-dichlorophenyl group, a 3,4-dimethylphenyl group, and a 3,5-dimethoxyphenyl group; a trisubstituted phenyl group, such as a 3,4,5-trimethylphenyl group and a 3,4,5-trichlorophenyl group; and a 2-naphthyl group optionally having a substituent, such as a 2-naphthyl group, a 3-methyl-2-naphthyl group, and a 4-methyl-2-naphthyl group.

In the group represented by -CH₂R³ of R¹, R³ represents a group selected from the group consisting of a hydrogen atom, an alkyl group optionally having a substituent, and an aryl group optionally having a substituent.

The number of carbon atoms in the alkyl group optionally having a substituent of R³ is preferably 1 to 20, and more preferably 1 to 10. The alkyl group may be either linear or branched. Examples of the substituent may include a phenyl group optionally having a substituent, such as a phenyl group and a 4-methylphenyl group; and an alkoxyl group, such as a methoxy group and an ethoxy group. As the substituent, one type thereof may be solely used, and two or more types thereof may also be used in combination at any ratio.

Examples of the alkyl group optionally having a substituent of R³ may include a methyl group, an ethyl group, a propyl group, an isopropyl group, a butyl group, an isobutyl group, a t-butyl group, a pentyl group, a neopentyl group, a benzyl group, and a neophyl group.

The number of carbon atoms in the aryl group optionally having a substituent of R³ is preferably 6 to 20, and more preferably 6 to 15. Examples of the substituent may include an alkyl group, such as a methyl group and an ethyl group; a halogen atom, such as a fluorine atom, a chlorine atom, and a bromine atom; and an alkoxy group, such as a methoxy group, an ethoxy group, and an isopropoxy group. As the substituent, one type thereof may be solely used, and two or more types thereof may also be used in combination at any ratio.

Examples of the aryl group optionally having a substituent of R³ may include a phenyl group, a 1-naphthyl group, a 2-naphthyl group, a 4-methylphenyl group, and a 2,6-dimethylphenyl group.

Of these, the alkyl group having 1 to 20 carbon atoms is preferable as the group represented by R³.

In the formula (1), R² is a group selected from the group consisting of an alkyl group optionally having a substituent and an aryl group optionally having a substituent. As each of the alkyl group optionally having a substituent and the aryl group optionally having a substituent of R², a group selected from groups exemplified as the alkyl group optionally having a substituent and the aryl group optionally having a substituent of R³ may be optionally used.

In the formula (1), X is a group selected from the group consisting of a halogen atom, an alkyl group optionally having a substituent, an aryl group optionally having a substituent, and an alkylsilyl group.

Examples of the halogen atom of X may include a chlorine atom, a bromine atom, and an iodine atom.

As each of the alkyl group optionally having a substituent and the aryl group optionally having a substituent of X, a group selected from groups exemplified as the alkyl group optionally having a substituent and the aryl group optionally having a substituent of R³ may be optionally used.

Examples of the alkylsilyl group of X may include a trimethylsilyl group, a triethylsilyl group, and a t-butyldimethylsilyl group.

When there are two or more X's in one molecule of the metal compound represented by the formula (1), these X's may be the same as or different from each other. Further, the two or more of X's may be bonded to each other to form a ring structure.

In the formula (1), L is a neutral electron donor ligand.

Examples of the neutral electron donor ligand of L may include an electron donor compound that contains an atom of Group 14 or 15 in the periodic table. Specific examples thereof may include phosphines, such as trimethylphosphine, triisopropylphosphine, tricyclohexylphosphine, and triphenylphosphine; ethers, such as diethyl ether, dibutyl ether, 1,2-dimethoxyethane, and tetrahydrofuran; and amines, such as trimethylamine, triethylamine, pyridine, and lutidine. Of these, ethers are preferable. When there are two or more L's in one molecule of the metal compound represented by the formula (1), these L's may be the same as or different from each other.

As the metal compound represented by the formula (1), a tungsten compound having a phenylimide group is preferable. That is, it is preferable that the compound of the formula (1) is a compound wherein M is a tungsten atom and R¹ is a phenyl group. Further, more specifically, a tetrachloro tungsten phenylimide (tetrahydrofuran) complex is more preferable.

The method for producing the metal compound represented by the formula (1) is not particularly limited. For example, the metal compound represented by the formula (1) may be produced by mixing an oxyhalogenated product of a Group 6 transition metal; a phenyl isocyanate optionally having a substituent on at least one of the positions 3, 4, and 5, or a monosubstituted methyl isocyanate; a neutral electron donor ligand (L); and if necessary, an alcohol, a metal alkoxide, and a metal aryloxide, in accordance with the description of Japanese Patent Application Laid-Open No. Hei. 5-345817 A.

In the production method described above, the metal compound represented by the formula (1) is usually obtained in a state where the compound is contained in a reaction liquid. After production of the metal compound, the aforementioned reaction liquid as it is may be used as a catalyst liquid for a ring-opening polymerization reaction. Alternatively, the metal compound may be isolated and purified from the reaction liquid by a purification treatment, such as crystallization, and the obtained metal compound may then be supplied to the ring-opening polymerization reaction.

As the ring-opening polymerization catalyst, the metal compound represented by the formula (1) may be solely used, and the metal compound represented by the formula (1) may also be used in combination with other components. For example, the metal compound may be used in combination with an organometallic reducing agent, to improve the polymerization activity.

Examples of the organometallic reducing agent may include organometallic compounds of Groups 1, 2, 12, 13, and 14 in the periodic table, having a hydrocarbon group of 1 to 20 carbon atoms. Examples of such an organometal compound may include an organolithium, such as methyllithium, n-butyllithium, and phenyllithium; an organomagnesium, such as butylethylmagnesium, butyloctylmagnesium, dihexylmagnesium, ethylmagnesium chloride, n-butylmagnesium chloride, and allylmagnesium bromide; an organozinc, such as dimethylzinc, diethylzinc, and diphenylzinc; an organoaluminum, such as trimethylaluminum, triethylaluminum, triisobutylaluminum, diethylaluminum chloride, ethylaluminum sesquichloride, ethylaluminum dichloride, diethylaluminum ethoxide, diisobutylaluminum isobutoxide, ethylaluminum diethoxide, and isobutylaluminum diisobutoxide; and an organotin, such as tetramethyltin, tetra(n-butyl)tin, and tetraphenyltin. Of these, an organoaluminum and an organotin are preferable. As the organometallic reducing agent, one type thereof may be solely used, and two or more types thereof may also be used in combination at any ratio.

The ring-opening polymerization reaction is usually carried out in an organic solvent. Any organic solvent that can dissolve or disperse a ring-opened polymer and a hydrogenated product thereof under a specific condition and does not inhibit a ring-opening polymerization reaction and a hydrogenation reaction may be used. Examples of such an organic solvent may include aliphatic hydrocarbons, such as pentane, hexane, and heptane; alicyclic hydrocarbons, such as cyclopentane, cyclohexane, methylcyclohexane, dimethylcyclohexane, trimethylcyclohexane, ethylcyclohexane, diethylcyclohexane, decahydronaphthalene, bicycloheptane, tricyclodecane, hexahydroindene, and cyclooctane; aromatic hydrocarbons, such as benzene, toluene, and xylene; halogen-containing aliphatic hydrocarbons, such as dichloromethane, chloroform, and 1,2-dichloroethane; halogen-containing aromatic hydrocarbons, such as chlorobenzene and dichlorobenzene; nitrogen-containing hydrocarbons, such as nitromethane, nitrobenzene, and acetonitrile; ethers, such as diethyl ether and tetrahydrofuran; and mixed solvents that are combinations of the foregoing. Of these, as the organic solvent, aromatic hydrocarbons, aliphatic hydrocarbons, alicyclic hydrocarbons, and ethers are preferable. As the organic solvent, one type thereof may be solely used, and two or more types thereof may also be used in combination at any ratio.

The ring-opening polymerization reaction may be initiated by, for example, mixing the cyclic olefin monomer, the metal compound represented by the formula (1), and if necessary, the organometallic reducing agent. The order of mixing these components is not particularly limited. For example, a solution containing the metal compound represented by the formula (1) and the organometallic reducing agent may be mixed with a solution containing the cyclic olefin monomer. Alternatively, a solution containing the cyclic olefin monomer and the metal compound represented by the formula (1) may be mixed with a solution containing the organometallic reducing agent. Further, a solution containing the metal compound represented by the formula (1) may be mixed with a solution containing the cyclic olefin monomer and the organometallic reducing agent. When mixing these components, the total amount of each component may be mixed at a time or over a plurality of times. The components may also be continuously mixed over a relatively long period of time (for example, 1 minute or more) .

The concentration of the cyclic olefin monomer in the reaction liquid at the starting point of the ring-opening polymerization reaction is preferably 1% by weight or more, more preferably 2% by weight or more, and particularly preferably 3% by weight or more, and is preferably 50% by weight or less, more preferably 45% by weight or less, and particularly preferably 40% by weight or less. When the concentration of the cyclic olefin monomer is equal to or more than the lower limit value of the above-mentioned range, productivity can be improved. When it is equal to or less than the upper limit value thereof, the viscosity of the reaction liquid after the ring-opening polymerization reaction can be lowered. Consequently, a subsequent hydrogenation reaction can be easily performed.

It is desirable that the amount of the metal compound represented by the formula (1) used in the ring-opening polymerization reaction is set such that the molar ratio of "metal compound : cyclic olefin monomer" falls within a specific range. Specifically, the molar ratio is preferably 1:100 to 1:2,000,000, more preferably, 1:500 to 1,000,000, and particularly preferably 1:1,000 to 1:500,000. When the amount of the metal compound is equal to or more than the lower limit value of the above-mentioned range, a sufficient polymerization activity can be obtained. When it is equal to less than the upper limit value thereof, the removal of the metal compound after the reaction can be facilitated.

The amount of the organometallic reducing agent is preferably 0.1 mol or more, more preferably 0.2 mol or more, and particularly preferably 0.5 mol or more, and is preferably 100 mol or less, more preferably 50 mol or less, and particularly preferably 20 mol or less, relative to 1 mol of the metal compound represented by the formula (1). When the amount of the organometallic reducing agent is equal to or more than the lower limit value of the above-mentioned range, a polymerization activity can be sufficiently increased. When it is equal to or less than the upper limit value thereof, occurrence of a side reaction can be suppressed.

The polymerization reaction system of the polymer (α) may contain an activity modifier. When the activity modifier is used, the ring-opening polymerization catalyst can be stabilized, the reaction rate of the ring-opening polymerization reaction can be adjusted, and the molecular weight distribution of the polymer can be adjusted.

As the activity modifier, an organic compound having a functional group may be used. Examples of such an activity modifier may include an oxygen-containing compound, a nitrogen-containing compound, and a phosphorus-containing organic compound.

Examples of the oxygen-containing compound may include ethers, such as diethyl ether, diisopropyl ether, dibutyl ether, anisole, furan, and tetrahydrofuran; ketones, such as acetone, benzophenone, and cyclohexanone; and esters, such as ethyl acetate.

Examples of the nitrogen-containing compound may include nitriles, such as acetonitrile and benzonitrile; amines, such as triethylamine, triisopropylamine, quinuclidine, and N,N-diethylaniline; and pyridines, such as pyridine, 2,4-lutidine, 2,6-lutidine, and 2-t-butylpyridine.

Examples of the phosphorus-containing compound may include phosphines, such as triphenylphosphine, tricyclohexylphosphine, triphenyl phosphate, and trimethyl phosphate; and phosphine oxides, such as triphenylphosphine oxide.

As the activity modifier, one type thereof may be solely used, and two or more types thereof may also be used in combination at any ratio.

The amount of the activity modifier in the polymerization reaction system of the polymer (α) is preferably 0.01 mol% to 100 mol% relative to 100 mol% of the metal compound represented by the formula (1).

The polymerization reaction system of the polymer (α) may include a molecular weight modifier to adjust the molecular weight of the polymer (α). Examples of the molecular weight modifier may include α-olefins, such as 1-butene, 1-pentene, 1-hexene, and 1-octene; an aromatic vinyl compound, such as styrene and vinyltoluene; an oxygen-containing vinyl compound, such as ethyl vinyl ether, isobutyl vinyl ether, allyl glycidyl ether, allyl acetate, allyl alcohol, and glycidyl methacrylate; a halogen-containing vinyl compound, such as allyl chloride; a nitrogen-containing vinyl compound, such as acrylamide; a non-conjugated diene, such as 1,4-pentadiene, 1,4-hexadiene, 1,5-hexadiene, 1,6-heptadiene, 2-methyl-1,4-pentadiene, and 2,5-dimethyl-1,5-hexadiene; and a conjugated diene, such as 1,3-butadiene, 2-methyl-1,3-butadiene, 2,3-dimethyl-1,3-butadiene, 1,3-pentadiene, and 1,3-hexadiene.

As the molecular weight modifier, one type thereof may be solely used, and two or more types thereof may also be used in combination at any ratio.

The amount of the molecular weight modifier in the polymerization reaction system for polymerizing the polymer (α) may be appropriately determined in accordance with a target molecular weight. The specific amount of the molecular weight modifier is preferably in a range of 0.1 mol% to 50 mol% relative to the cyclic olefin monomer.

The polymerization temperature is preferably - 78°C or higher, and more preferably -30°C or higher, and is preferably +200°C or lower, and more preferably +180°C or lower.

The polymerization time may depend on the reaction scale. The specific polymerization time is preferably in a range of 1 minute to 1,000 hours.

The polymer (α) may be obtained by the production method described above. The polymer (β) may be produced by hydrogenating the polymer (α).

Hydrogenation of the polymer (α) may be performed, for example, by supplying hydrogen into a reaction system containing the polymer (α) in the presence of a hydrogenation catalyst in accordance with an ordinary method. The hydrogenation reaction usually does not affect the tacticity of the hydrogenated product as long as reaction conditions of the hydrogenation reaction are set appropriately.

As a hydrogenation catalyst, a homogeneous catalyst and heterogeneous catalyst, known as a hydrogenation catalyst for an olefin compound, may be used.

Examples of the homogeneous catalyst may include a catalyst including a combination of a transition metal compound and an alkali metal compound, such as cobalt acetate/triethylaluminum, nickel acetylacetonate/triisobutylaluminum, titanocene dichloride/n-butyllithium, zirconocene dichloride/sec-butyllithium, and tetrabutoxytitanate/dimethylmagnesium; and a noble metal complex catalyst, such as dichlorobis(triphenylphosphine) palladium, chlorohydridocarbonyltris(triphenylphosphine) ruthenium, chlorohydridocarbonylbis(tricyclohexylphosphine) ruthenium, bis(tricyclohexylphosphine)benzylidine ruthenium(IV) dichloride, and chlorotris(triphenylphosphine) rhodium.

Examples of the heterogeneous catalyst may include a metal catalyst, such as nickel, palladium, platinum, rhodium, and ruthenium; and a solid catalyst in which the metal described above is supported on a carrier, such as carbon, silica, diatomaceous earth, alumina, and titanium oxide, examples of which may include nickel/silica, nickel/diatomaceous earth, nickel/alumina, palladium/carbon, palladium/silica, palladium/diatomaceous earth, and palladium/alumina.

As the hydrogenation catalyst, one type thereof may be solely used, and two or more types thereof may also be used in combination at any ratio.

The hydrogenation reaction is usually carried out in an inert organic solvent. Examples of the inert organic solvent may include aromatic hydrocarbons, such as benzene and toluene; aliphatic hydrocarbons, such as pentane and hexane; alicyclic hydrocarbons, such as cyclohexane and decahydronaphthalene; and ethers, such as tetrahydrofuran and ethylene glycol dimethyl ether. As the inert organic solvent, one type thereof may be solely used, and two or more types thereof may also be used in combination at any ratio. The inert organic solvent may be the same as, and may also be different from the organic solvent used in the ring-opening polymerization reaction. Further, the hydrogenation catalyst may be mixed with the reaction liquid of the ring-opening polymerization reaction to perform the hydrogenation reaction.

The reaction conditions for the hydrogenation reaction usually vary depending on the hydrogenation catalyst to be used.

The reaction temperature of the hydrogenation reaction is preferably -20°C or higher, more preferably -10°C or higher, and particularly preferably 0°C or higher, and is preferably +250°C or lower, more preferably +220°C or lower, and particularly preferably +200°C or lower. When the reaction temperature is equal to or more than the lower limit value of the above-mentioned range, the reaction rate can be increased. When it is equal to or less than the upper limit value thereof, occurrence of a side reaction can be suppressed.

The hydrogen pressure is preferably 0.01 MPa or higher, more preferably 0.05 MPa or higher, and particularly preferably 0. 1 MPa or higher, and is preferably 20 MPa or lower, more preferably 15 MPa or lower, and particularly preferably 10 MPa or lower. When the hydrogen pressure is equal to more than the lower limit value of the above-mentioned range, the reaction rate can be increased. When it is equal to or less than the upper limit value thereof, a special device such as a high pressure resistant reaction device is not necessary. Therefore, facility costs can be reduced.

The reaction time of the hydrogenation reaction may be set to any time length in which a desired hydrogenation ratio is achieved, and is preferably 0.1 hours to 10 hours.

After the hydrogenation reaction, the polymer (β), as the hydrogenated product of the polymer (α), is usually recovered in accordance with an ordinary method.

The hydrogenation ratio (i.e., a ratio of main-chain double bonds that are hydrogenated) in the hydrogenation reaction is preferably 98% or more, and more preferably 99% or more. When the polymer has a high hydrogenation ratio, heat resistance of the alicyclic structure-containing polymer can be improved.

The hydrogenation ratio of the polymer described herein may be measured by ¹H-NMR measurement at 145°C using orthodichlorobenzene-d⁴ as a solvent.

Subsequently, the method for producing the polymer (γ) and polymer (δ) will be described.

As a cyclic olefin monomer used in the production of the polymer (γ) and the polymer (δ), any cyclic olefin monomer selected from those exemplified as the cyclic olefin monomers usable in the production of the polymer (α) and the polymer (β) may be used. As the cyclic olefin monomer, one type thereof may be solely used, and two or more types thereof may also be used in combination at any ratio.

In the production of the polymer (γ), an optional monomer copolymerizable with the cyclic olefin monomer may be used as a monomer in combination with the cyclic olefin monomer. Examples of the optional monomer may include an α-olefin having 2 to 20 carbon atoms, such as ethylene, propylene, 1-buten, 1-pentene, and 1-hexene; an aromatic vinyl compound, such as styrene and α-methylstyrene; and a non-conjugated diene, such as 1,4-hexadiene, 4-methyl-1,4-hexadiene, 5-methyl-1,4-hexadiene, and 1,7-octadiene. Of these, an α-olefin is preferable and ethylene is more preferable. As the optional monomer, one type thereof may be solely used, and two or more types thereof may also be used in combination at any ratio.

The weight ratio of the cyclic olefin monomer and the optional monomer (cyclic olefin monomer : optional monomer) is preferably 30:70 to 99:1, more preferably 50:50 to 97:3, and particularly preferably 70:30 to 95:5.

In cases wherein two or more types of the cyclic olefin monomer are used, and in cases wherein the cyclic olefin monomer and the optional monomer are used in combination, the polymer (γ) may be a block copolymer, and may also be a random copolymer.

In the synthesis of the polymer (γ), an addition polymerization catalyst is usually used. Examples of the addition polymerization catalyst may include a vanadium-based catalyst formed from a vanadium compound and an organoaluminum compound, a titanium-based catalyst formed from a titanium compound and an organoaluminum compound, and a zirconium-based catalyst formed from a zirconium complex and an aluminoxane. As the addition polymerization catalyst, one type thereof may be solely used, and two or more types thereof may also be used in combination at any ratio.

The amount of the addition polymerization catalyst is preferably 0.000001 mol or more, and more preferably 0.00001 mol or more, and is preferably 0.1 mol or less, and more preferably 0.01 mol or less, relative to 1 mol of the monomer.

The addition polymerization of the cyclic olefin monomer is usually carried out in an organic solvent. As the organic solvent, any organic solvent selected from those exemplified as the organic solvents usable in the ring-opening polymerization of the cyclic olefin monomer may be used. As the organic solvent, one type thereof may be solely used, and two or more types thereof may also be used in combination at any ratio.

The polymerization temperature in the polymerization for producing the polymer (γ) is preferably -50°C or higher, more preferably -30°C or higher, and particularly preferably -20°C or higher, and is preferably 250°C or lower, more preferably 200°C or lower, and particularly preferably 150°C or lower. The polymerization time is preferably 30 minutes or longer, and more preferably 1 hour or longer, and is preferably 20 hours or shorter, and more preferably 10 hours or shorter.

The polymer (γ) may be obtained by the production method described above. The polymer (δ) may be produced by hydrogenating the polymer (γ).

Hydrogenation of the polymer (γ) may be performed by the same method as described for the hydrogenation of the polymer (α).

The ratio of the alicyclic structure-containing polymer having crystallizability in the crystallizable resin is preferably 50% by weight or more, more preferably 70% by weight or more, and particularly preferably 90% by weight or more. When the ratio of the alicyclic structure-containing polymer having crystallizability is equal to or more than the lower limit value of the above-mentioned range, the heat resistance of the resin film of the present invention can be increased.

In addition to the alicyclic structure-containing polymer having crystallizability, the crystallizable resin may contain an optional component. Examples of the optional component may include an antioxidant, such as a phenolic antioxidant, a phosphorus-based antioxidant, and a sulfur-based antioxidant; a light stabilizer, such as a hindered amine-based light stabilizer; a wax, such as a petroleum-based wax, a Fischer-Tropsch wax, and a polyalkylene wax; a nucleating agent, such as a sorbitol-based compound, a metal salt of an organic phosphoric acid, a metal salt of an organic carboxylic acid, kaolin, and talc; a fluorescent brightening agent, such as a diaminostilbene derivative, a coumarin derivative, an azole-based derivative (for example, a benzoxazole derivative, a benzotriazole derivative, a benzimidazole derivative, and a benzothiazole derivative), a carbazole derivative, a pyridine derivative, a naphthalic acid derivative, and an imidazolone derivative; a ultraviolet absorbing agent, such as a benzophenone-based ultraviolet absorbing agent, a salicylic acid-based ultraviolet absorbing agent, and a benzotriazole-based ultraviolet absorbing agent; an inorganic filler, such as talc, silica, calcium carbonate, and a glass fiber; a colorant; a flame retardant; a flame retardant promoter; an antistatic agent; a plasticizer; a near-infrared absorbing agent; a lubricant; a filler; and an optional polymer other than the alicyclic structure-containing polymer having crystallizability, such as a soft polymer. As the optional component, one type thereof may be solely used, and two or more types thereof may also be used in combination at any ratio.

### [1.3. Properties Of Resin Film]

The resin film of the present invention is excellent in the folding resistance. The folding resistance of the resin film of the present invention may be specifically represented by folding endurance. The resin film of the present invention has the folding endurance of usually 2,000 times or more, preferably 2,200 times or more, and more preferably 2,400 times or more. As high folding endurance is preferred, there is no limitation to the upper limit of the folding endurance. However, the folding endurance is usually 100,000 times or less.

The folding endurance of the resin film may be measured by an MIT folding endurance test in accordance with JIS P 8115 "Paper and board - Determination of folding endurance - MIT method", using the following procedures.

As a sample, a test piece of a width of 15 mm ± 0.1 mm and a length of about 110 mm is cut out of the resin film. In this process, the test piece is prepared in a manner such that a direction in which the resin film is stretched more strongly becomes parallel with the side of about 110 mm of the test piece. Then, the above-mentioned test piece is bent so as to form a folding line in the width direction of the test piece using an MIT folding endurance tester ("No. 307" manufactured by Yasuda Seiki Seisakusho Ltd.), under conditions of a load of 9.8 N, a curvature of a folding portion of 0.38 ± 0.02 mm, a folding angle of 135° ± 2°, and a folding speed of 175 times/min. The bending is continued, and the number of reciprocating bending times until the occurrence of the test piece rupture was counted.

Ten test pieces are prepared and the measurement for determining the number of reciprocating bending times until the occurrence of the test piece rupture is performed ten times in accordance with the above-mentioned method. An average of ten measurement values obtained in this manner is employed as the folding endurance (MIT folding endurance) of the resin film.

Further, the resin film of the present invention is excellent in the low water-absorption property. The low water-absorption property of the resin film of the present invention may be specifically represented by a water-absorption rate. The water-absorption rate of the resin film of the present invention is usually 0.1% or less, preferably 0.08% or less, and more preferably 0.05% or less.

The water-absorption rate of the resin film may be measured by the following method.

As a sample, a test piece is cut out of the resin film and the weight of the test piece is measured. Then, this test piece is immersed into water of 23°C for 24 hours and the weight of the test piece after the immersion is measured. Then, the ratio of the weight increase of the test piece after the immersion relative to the weight of the test piece before the immersion may be calculated to obtain the water-absorption rate (%).

Further, the resin film of the present invention has a heat resistant temperature of 180°C or higher and a crystallinity degree of the alicyclic structure-containing polymer of 10% or more. The resin film having such features is excellent in the heat resistance.

The heat resistant temperature of the resin film of the present invention is usually 180°C or higher, preferably 200°C or higher, and more preferably 220°C or higher. As high heat resistant temperature is preferred, there is no limitation to the upper limit of the heat resistant temperature. However, the heat resistant temperature is usually a melting point Tm or lower of the alicyclic structure-containing polymer.

The following method may be used to confirm that the heat resistant temperature of the resin film is within the above-mentioned range.

As a sample, the resin film in a tensionless state is left at an atmospheric temperature of Tx for 10 min. Then, the surface condition of the resin film is visually inspected. If irregularity is not observed on the surface of the resin film, the heat resistant temperature of the resin film is determined to be equal to or higher than the above-mentioned temperature Tx.

The crystallinity degree of the alicyclic structure-containing polymer contained in the resin film of the present invention is 10% or more, more preferably 15% or more, and particularly preferably 20% or more, and is preferably 70% or less, more preferably 60% or less, and particularly preferably 50% or less. When the crystallinity degree of the alicyclic structure-containing polymer contained in the resin film is equal to or more than the lower limit value of the above-mentioned range, the heat resistance of the resin film can be increased. Further, it is equal to or less than the upper limit value thereof, transparency of the film can be improved.

The crystallinity degree of the alicyclic structure-containing polymer contained in the resin film may be measured by an X-ray diffraction method.

The resin film of the present invention is, as described above, excellent in all of the low water-absorption property, the heat resistance, and the folding resistance. It is assumed that the excellent low water-absorption property described above can be achieved by using the alicyclic structure-containing polymer having the low water-absorption property. Further, it is assumed that the excellent heat resistance described above can be achieved not only because the alicyclic structure-containing polymer having the excellent heat resistance is present in the resin film, but also because the heat resistance of the alicyclic structure-containing polymer has been increased by crystallization. It is further assumed that the excellent folding resistance described above can be achieved by suppressing the embrittlement of the crystallized alicyclic structure-containing polymer by orienting molecules of the alicyclic structure-containing polymer by stretching. However, the present invention is not limited by those assumptions.

Further, the resin film of the present invention usually has a smooth surface. Smoothness of the resin film surface improves handling property of the resin film, characteristics of the resin film, such as an optical characteristic, and the like.

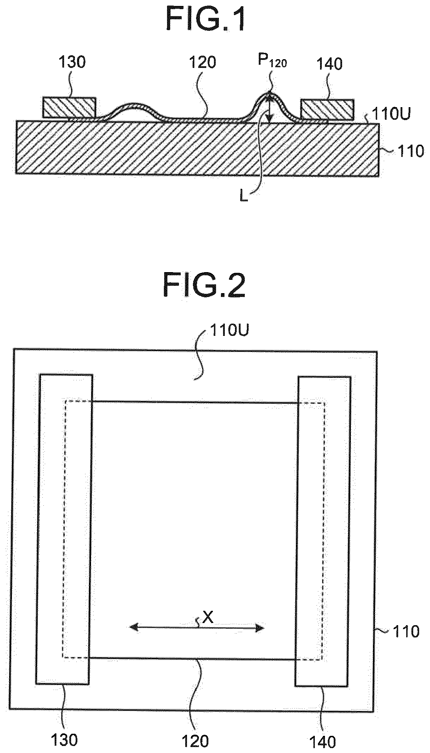

The smoothness of the resin film described above may be determined by a determination method including the following steps (i) to (viii). FIG. 1 is a cross-sectional view schematically illustrating the state of a test piece in the determination method for determining whether the resin film is smooth or not. Further, FIG. 2 is a plan view schematically illustrating the state of the test piece in the determination method for determining whether the resin film is smooth or not.
(i) As a sample, five test pieces each having a 150 mm × 150 mm square shape are cut out of the resin film. In this process, each test piece is prepared in a manner such that the sides of the square become parallel or perpendicular to a direction in which the resin film is stretched most strongly.
(ii) As illustrated in FIG. 1 and FIG.2, the test piece 120 is placed on a horizontal flat supporting face 110U of a surface plate 110.
(iii) In order to prevent the test piece 120 from curling, weights 130 and 140 are placed on both terminal 10 mm portions of the test piece 120 in a direction X in which the resin film is stretched most strongly.
(iv) Keeping this state, the test piece 120 is scanned by a three-dimensional shape detecting device ("MCAx20, an articulated three-dimensional shape detecting device" manufactured by Nikon Metrology, Inc.), thereby measuring a three-dimensional shape of the test piece 120.
(v) On the basis of the measured three-dimensional shape, a distance L from the supporting face 110U of the surface plate 110 to a point P₁₂₀ on the test piece 120 positioned farthest from the supporting face 110U is obtained.
(vi) After turning over the test piece, the above-mentioned steps from (ii) to (v) are performed to obtain another distance L.
(vii) Also for four remaining test pieces, the above-mentioned steps from (ii) to (vi) are performed to obtain distances L.
(viii) If all the distances L measured in five test pieces are less than 2 mm, the resin film is determined to be "smooth". On the other hand, if any one of the distances L measured in five test pieces exceeds 2 mm, the resin film is determined to be not smooth.

The alicyclic structure-containing polymer contained in the resin film of the present invention is preferably oriented. Thus, the resin film preferably has a plane orientation coefficient Δne expressed by an absolute value within a specific range.

The specific range of the absolute value of the plane orientation coefficient |Δne| of the resin film of the present invention is 0.010 or more, more preferably 0.012 or more, and particularly preferably 0.014 or more, and is preferably 0.100 or less, more preferably 0.090 or less, and particularly preferably 0.080 or less.

The absolute value of the plane orientation coefficient of the resin film |Δne| is an absolute value of Δne that is represented by a formula "Δne = (nx + ny)/2 - nz)". nx represents a refractive index in a direction in which the maximum refractive index is given among directions perpendicular to a thickness direction of the resin film (in-plane directions), ny represents a refractive index in a direction perpendicular to the direction giving nx among the above-mentioned in-plane directions of the resin film, and nz represents a refractive index in the thickness direction of the resin film. The measurement wavelength of the above-mentioned refractive indices nx, ny, and nz is 550 nm unless otherwise specified.

The resin film of the present invention is preferably excellent in transparency. Specifically, the total light transmittance of the resin film of the present invention is preferably 70% or more, more preferably 80% or more, and particularly preferably 90% or more.

The total light transmittance of the resin film may be measured by using an ultraviolet and visible spectrophotometer in a wavelength range of 400 nm to 700 nm.

The resin film of the present invention preferably has a low haze. Specifically, the haze of the resin film of the present invention is preferably 10% or less, more preferably 5% or less, and particularly preferably 3% or less.

The haze of the resin film may be obtained by cutting out a randomly selected portion of the resin film to obtain a thin-layer sample having a square shape with a size of 50 mm × 50 mm, and then performing measurement for the thin-layer sample with a haze meter.

The resin film of the present invention may have retardation depending on the application. For example, when the resin film of the present invention is used as an optical film such as a phase difference film and an optical compensation film, it is preferable that the resin film has retardation.

### [1.4. Thickness Of Resin Film]

The thickness of the resin film of the present invention is preferably 1 µm or more, more preferably 3 µm or more, and particularly preferably 5 µm or more, and is preferably 400 µm or less, more preferably 200 µm or less, and particularly preferably 100 µm or less.

### [1.5. Use Of Resin Film]

The resin film of the present invention may be used for any purpose. In particular, the resin film of the present invention is suitable, for example, as an optical film, such as an optically isotropic film and a phase difference film, an electrical/electronics film, a substrate film for a barrier film, and a substrate film for an electroconductive film. Examples of the optical film may include a phase difference film for a liquid crystal display device, a polarizing plate protection film, and a phase difference film for a circular polarization plate of an organic EL display device. Examples of the electrical/electronics film may include a flexible circuit board and an insulation material for a film capacitor. Examples of the barrier film may include a substrate for an organic EL element, a sealing film, and a sealing film of a solar cell. Examples of the electroconductive film may include a flexible electrode for an organic EL element and a solar cell and a touch panel member.

### [2. Method for producing Resin Film]

The resin film of the present invention may be produced by, for example, a method for producing the resin film of the present invention including: a first step of stretching a pre-stretch film formed of a resin containing the alicyclic structure-containing polymer having crystallizability to obtain a stretched film; and a second step of heating the stretched film after the first step. Hereinafter, this production method will be described.

### [2.1. Preparation of Pre-stretch Film]

The method for producing the resin film of the present invention includes a step of preparing a pre-stretch film. The pre-stretch film is a film formed of a crystallizable resin.

Examples of the method for producing the pre-stretch film formed of the crystallizable resin may include a resin molding method, such as an injection molding method, an extrusion molding method, a press molding method, an inflation molding method, a blow molding method, a calendar molding method, a cast molding method, and a compression molding method. Of these, an extrusion molding method is preferable from the standpoint of easily controlling the thickness.

When the pre-stretch film is produced by the extrusion molding method, preferable production conditions of the extrusion molding method are as follows. The temperature of a cylinder (molten resin temperature) is preferably Tm or higher, and more preferably (Tm + 20°C) or higher, and is preferably (Tm + 100°C) or lower, and more preferably (Tm + 50°C) or lower. Further, the temperature of a cast roll is preferably (Tg - 50°C) or higher, and is preferably (Tg + 70°C) or lower, and more preferably (Tg + 40°C) or lower. A pre-stretch film having a desired thickness can be readily produced when the pre-stretch film is produced under such conditions. Herein, "Tm" represents the melting point of the alicyclic structure-containing polymer, and "Tg" represents the glass transition temperature of the alicyclic structure-containing polymer.

The thickness of the pre-stretch film may be optionally set in accordance with a thickness of the resin film to be produced, and it is preferably 5 µm or more, more preferably 20 µm or more, and particularly preferably 40 µm or more, and is preferably 400 µm or less, more preferably 300 µm or less, and particularly preferably 200 µm or less.

### [2.2. First Step: Stretching Step]

After preparing the pre-stretch film, the first step of stretching the pre-stretch film is performed to obtain a stretched film.

The method of stretching the pre-stretch film is not particularly limited and any stretching method may be used. Examples of the stretching method may include a uniaxial stretching method, such as a method of uniaxially stretching the pre-stretch film in a longitudinal direction (longitudinal uniaxial stretching method) and a method of uniaxially stretching the pre-stretch film in a width direction (transverse uniaxial stretching method); a biaxial stretching method, such as a simultaneous biaxial stretching method of stretching the pre-stretch film in the width direction at the same time as stretching the pre-stretch film in the longitudinal direction and a sequential biaxial stretching method of stretching the pre-stretch film in one of the longitudinal direction and the width direction and then stretching the pre-stretch film in the other direction; and a method of stretching the pre-stretch film in a diagonal direction that is neither parallel nor perpendicular to the width direction (diagonal stretching method).

Examples of the longitudinal uniaxial stretching method may include a stretching method utilizing the difference in peripheral speed between rolls.

Examples of the transverse uniaxial stretching method may include a stretching method using a tenter stretching machine.

Examples of the simultaneous biaxial stretching method may include a stretching method in which a tenter stretching machine including a plurality of clips capable of holding the pre-stretch film, the clips being provided movably along guide rails, is used to stretch the pre-stretch film in a longitudinal direction by extending intervals of the clips and to simultaneously stretch the pre-stretch film in a width direction by utilizing a spreading angle of the guide rails.

Examples of the sequential biaxial stretching method may include a stretching method in which the pre-stretch film is stretched in a longitudinal direction by utilizing the difference in peripheral speed between rolls, and then stretched in a width direction by a tenter stretching machine holding both end parts of the pre-stretch film with clips.

Examples of the diagonal stretching method may include a stretching method in which the pre-stretch film is continuously stretched in a diagonal direction using a tenter stretching machine which is capable of applying feeding force, tensile force or take-up force at different speeds on left and right sides of the pre-stretch film in the longitudinal or width direction.

When the pre-stretch film is stretched in the first step, the stretching temperature is preferably (TG - 30°C) or higher, and more preferably (TG - 10°C) or higher, and is preferably (TG + 60°C) or lower, and more preferably (TG + 50°C) or lower. Herein, "TG" represents a glass transition temperature of the crystallizable resin. When the stretching is performed within such a temperature range, polymer molecules contained in the pre-stretch film can be appropriately oriented, whereby folding resistance of the resin film can be effectively improved.

When the pre-stretch film is stretched, the stretch ratio is preferably 1.2 times or more, and more preferably 1.5 times or more, and is usually 20 times or less, preferably 15 times or less, and more preferably 10 times or less. When the stretching is performed in the first step in a plurality of different directions as in the case of the biaxial stretching, it is preferable that a total stretching ratio represented by the product of the stretch ratios in the respective stretching directions falls within the above-mentioned range. When the stretch ratio is confined within the above-mentioned range, polymer molecules contained in the pre-stretch film can be appropriately oriented, whereby folding resistance of the resin film can be effectively improved.

When the pre-stretch film is subjected to the stretching as described above, a stretched film can be obtained. In the stretched film thus obtained, molecules of the alicyclic structure-containing polymer contained in the stretched film are oriented. Thereby the embrittlement of the resin film can be prevented when the alicyclic structure-containing polymer is crystallized by heat in the second step, and thus the folding resistance of the resin film can be improved. Further, stretching of the pre-stretch film can suppress the generation of large crystal grains caused by heat in the second step. Thus, whitening of the resin film due to crystal grains can be suppressed, whereby transparency of the resin film can be improved.

The thickness of the stretched film may be optionally set in accordance with the thickness of the resin film to be produced, and it is preferably 1 µm or more, and more preferably 3 µm or more, and is preferably 500 µm or less, and more preferably 200 µm or less.

### [2.3. Second Step: Heating Step]

After obtaining the stretched film in the first step described above, the second step of heating the stretched film is performed. When the stretched film is heated in the second step, crystallization of the alicyclic structure-containing polymer usually proceeds while maintaining its orientation state. Thus, the second step described above gives the resin film containing the alicyclic structure-containing polymer that is crystallized while maintaining its orientation state.

The heating temperature of the stretched film in the second step is preferably set in a specific temperature range from not less than a glass transition temperature Tg of the alicyclic structure-containing polymer contained in the stretched film to not more than a melting point Tm of the alicyclic structure-containing polymer. Thereby the alicyclic structure-containing polymer can be effectively crystallized. Further, in the specific temperature range described above, the temperature is preferably set so as to increase the speed of crystallization. For example, when a hydrogenated product of the ring-opened polymer of dicyclopentadiene is used as the alicyclic structure-containing polymer, the heating temperature of the stretched film in the second step is preferably 110°C or higher, and more preferably 120°C or higher, and is preferably 240°C or lower, and more preferably 220°C or lower.

It is preferable that the heating device for heating the stretched film is a heating device which can increase the atmospheric temperature around the stretched film as a physical contact between the heating device and the stretched film is unnecessary. Specific examples of the suitable heating device may include an oven and a heating furnace.

Further, in the second step, it is preferable that the stretched film is heated in a strained state where at least two sides of the stretched film are held. The strained state of the stretched film described herein refers to a state in which a tension is applied to the stretched film. The strained state of the stretched film, however, does not include a state in which the stretched film is substantially stretched. Further, "substantially stretched" refers to a state in which the stretched film is stretched in any direction at a stretch ratio of usually 1.1 times or more.

By heating the stretched film in the strained state where at least two sides of the stretched film are held, the stretched film can be prevented from being deformed due to heat shrinkage in a region between the sides that are held. Regarding this, in order to prevent the deformation of the stretched film over a wide area, it is preferable that sides including two opposite sides are held to keep the region between the held sides in a strained state. For example, in the case of the stretched film which has a rectangular sheet piece form, it is preferable that two opposite sides (for example, long sides or short sides) are held to keep the region between the two sides in a strained state, whereby deformation over the entire surface of the stretched film in a sheet piece form can be prevented. Further, in the case of the long-length stretched film, it is preferable that two sides at end parts in the width direction (i.e., long sides) are held to keep the region between the two sides in a strained state, whereby the deformation is prevented over the entire surface of the long-length stretched film. In the stretched film whose deformation is prevented in this manner, occurrence of deformation, such as a wrinkle, is suppressed even when a stress is caused in the film by heat shrinkage. This can suppress a loss of smoothness of the resin film caused by heat. Accordingly, a smooth resin film with less waviness and wrinkles can be obtained.

In order to more surely suppress the deformation during heating, it is preferable that a larger number of sides are held. For example, regarding the stretched film in a sheet piece form, it is preferable that all sides thereof are held. Specifically, it is preferable that four sides of the stretched film in the rectangular sheet piece form are held.

For holding the stretched film, sides of the stretched film may be held by a suitable holding tool. The holding tools may be a holding tool capable of continuously holding the stretched film over the entire length of the sides, or intermittently holding the stretched film with intervals. For example, the side of the stretched film may be intermittently held by the holding tools disposed at specific intervals.

Further, the holding tool preferably does not come in contact with the stretched film other than the side of the stretched film. By the use of such a holding tool, a resin film having better smoothness can be obtained.

It is preferable that the holding tools are those which can fix a relative position between the holding tools in the second step. As the position between the holding tools does not relatively shift in the second step, the holding tools is advantageous for suppressing substantial stretching of the stretched film during heating.

Suitable examples of the holding tools may include grippers which are provided in a frame at specific intervals as holding tools for the rectangular stretched film and can grip the sides of the stretched film, such as clips. Examples of holding tools for holding two sides at end parts of the width direction of the long-length stretched film may include grippers which are provided to a tenter stretching machine and can grip the sides of the stretched film.

When the long-length stretched film is used, sides located at end parts in a longitudinal direction (i.e., short sides) of the stretched film may be held. However, instead of holding these sides, the stretched film may be held at both side areas in the longitudinal direction of a region where the stretched film is heated in the specific temperature range. For example, a holding device capable of holding the stretched film in a strained state for not causing heat shrinkage may be disposed at the both areas of the stretched film in the longitudinal direction of the region where the stretched film is heated in the specific temperature range. Examples of such a holding device may include a device formed by a combination of two rolls. By applying with this combination a tension such as a conveyance tension to the stretched film, heat shrinkage of the stretched film can be suppressed in the region where the stretched film is heated in the specific temperature range. Therefore, when the combination is used as the holding device, the stretched film can be held while it is conveyed in the longitudinal direction. Thereby the resin film can be efficiently produced.

The processing time for maintaining the stretched film in the specific temperature range described above in the second step is preferably 5 seconds or more, and more preferably 10 seconds or more, and is preferably 1 hour or less. In this manner, the crystallization of the alicyclic structure-containing polymer can be sufficiently advanced, whereby heat resistance of the resin film can be particularly improved.

### [2.4. Optional Step]

The method for producing the resin film of the present invention may include an optional step in combination with the above-mentioned steps.

For example, the method for producing the resin film of the present invention may include an optional step of applying a surface treatment to the resin film.

### [EXAMPLES]

The present invention will be described in detail hereinbelow by way of Examples. However, the present invention is not limited to Examples described below and may be freely modified and practiced without departing from the scope of claims of the present invention and the scope of their equivalents.

In the following description, "%" and "part" that represent an amount are on the basis of weight unless otherwise specified. Further, unless otherwise specified, the operations described below were performed under the conditions of normal temperature and normal pressure.

### [Evaluation Methods]

### [Method for measuring Weight-Average Molecular Weight And Number-Average Molecular Weight]

A weight-average molecular weight and number-average molecular weight of the polymer were measured in terms of polystyrene by using a gel permeation chromatography (GPC) system ("HLC-8320" manufactured by Tosoh Corp.). In the measurement, an H-type column (manufactured by Tosoh Corp.) was used as a column and tetrahydrofuran was used as a solvent. The measurement was performed at a temperature of 40°C.

### [Method for Measuring Melting Point Tm]

A sample that had been heated to 300°C in a nitrogen atmosphere was rapidly cooled using liquid nitrogen and heated at a heating rate of 10°C/min using a differential operation calorimeter (DSC) to determine the melting point of the sample.

### [Method for Measuring Hydrogenation Ratio of Polymer]

The hydrogenation ratio of the polymer was measured by ¹H-NMR measurement at 145°C using orthodichlorobenzene-d⁴ as a solvent.

### [Method for Measuring Ratio of Racemo Diads of Polymer]

The polymer was subjected to ¹³C-NMR measurement at 150°C by an inverse-gated decoupling method using orthodichlorobenzene-d⁴ as a solvent. From the result of the ¹³C-NMR measurement, the ratio of racemo diads of the polymer was obtained on the basis of an intensity ratio of the signal at 43.35 ppm derived from meso diads and the signal at 43.43 ppm derived from racemo diads using the peak of orthodichlorobenzene-d⁴ at 127.5 ppm as a reference shift.

### [Method for measuring Crystallinity Degree of Polymer]

Crystallinity degree of the polymer contained in the film was measured by an X-ray diffraction method.

### [Method for Evaluating Folding Endurance]

The folding endurance of the film was measured by an MIT folding endurance test in accordance with JIS P 8115 "Paper and board - Determination of folding endurance - MIT method", using the following procedures.

As a sample, a test piece of a width of 15 mm ± 0.1 mm and a length of about 110 mm was cut out of the film. In this process, when the film was produced through the stretching treatment, the test piece is prepared in a manner such that a direction in which the film is stretched more strongly became parallel with the side of about 110 mm of the test piece.

The test piece was bent so as to form a folding line in the width direction of the test piece using an MIT folding endurance tester ("No. 307" manufactured by Yasuda Seiki Seisakusho Ltd.), under conditions of a load of 9.8 N, a curvature of a folding portion of 0.38 ± 0.02 mm, a folding angle of 135° ± 2°, and a folding speed of 175 times/min. The bending was continued, and the number of reciprocating bending times until the occurrence of the test piece rupture was counted.

Ten test pieces were prepared and the measurement for determining the number of reciprocating bending times until the occurrence of the test piece rupture was performed ten times in accordance with the above-mentioned method. An average of ten measurement values obtained in this manner was employed as the folding endurance (MIT folding endurance) of the film.

2,000 times or more of the folding endurance was evaluated as "good", while less than 2,000 times of the folding endurance was evaluated as "poor".

### [Method for Evaluating Water-Absorption Rate]

As a sample, a test piece of a width of 100 mm and a length of 100 mm was cut out of the film and the weight of the test piece was measured. This test piece was then immersed into water of 23°C for 24 hours and the weight of the test piece after the immersion was measured. Then, the ratio of the weight increase of the test piece after the immersion relative to the weight of the test piece before the immersion was calculated to obtain the water-absorption rate (%).

The water-absorption rate of 0.1% or less was evaluated as "good", while the water-absorption rate of greater than 0.1% was evaluated as "poor".

### [Method for Evaluating Heat Resistance]

As a sample, the resin film in a tensionless state was left at an atmospheric temperature of 180°C for 10 minutes. Then, the surface condition of the film was visually inspected.

If irregularity was observed on the surface of the film, the heat resistant temperature of the resin film was determined to be less than 180°C and the film was evaluated as "poor". On the other hand, if the irregularity was not observed on the surface of the film, the heat resistant temperature of the resin film was determined to be equal to or higher than 180°C and the film was evaluated as "good".

### [Method for Evaluating Smoothness]

Smoothness of the resin film was evaluated by performing the following steps (i) to (viii) in this order.
(i) As a sample, the resin film was equally divided into five parts in a width direction to obtain five divided films. From a middle part of each divided film thus obtained, a test piece having a 150 mm × 150 mm square shape was cut out. A total of five test pieces were obtained in this manner. In this process, each test piece was prepared in a manner such that the sides of the square of the test piece became parallel or perpendicular to a direction in which the resin film is stretched most strongly.
(ii) As shown in FIG. 1 and FIG.2, the test piece 120 was placed on a horizontal flat supporting face 110U of a surface plate 110.
(iii) In order to prevent the test piece 120 from curling, weights 130 and 140 were placed on both terminal 10 mm portions of the test piece 120 in a direction X in which the resin film is stretched most strongly.
(iv) Keeping this state, the test piece 120 was scanned by a three-dimensional shape detecting device ("MCAx20, an articulated three-dimensional shape detecting device" manufactured by Nikon Metrology, Inc.), thereby measuring a three-dimensional shape of the test piece 120.
(v) On the basis of the measured three-dimensional shape, a distance L from the supporting face 110U of the surface plate 110 to a point P₁₂₀ on the test piece 120 positioned farthest from the supporting face 110U was obtained.
(vi) After turning over the test piece, the above-mentioned steps from (ii) to (v) were performed to obtain another distance L.
(vii) Also for four remaining test pieces, the above-mentioned steps from (ii) to (vi) were performed to obtain distances L.
(viii) If all the distances L measured in five test pieces were less than 2 mm, the resin film was determined to be smooth, and the smoothness of the film was evaluated as "good". On the other hand, if any one of the distances L measured in five test pieces exceeded 2 mm, the resin film was determined to be not smooth and the smoothness of the film was evaluated as "poor".

### [Production Example 1. Production of Hydrogenated Product of Ring-Opened Polymer of Dicyclopentadiene]

A metal pressure-resistant reaction vessel was sufficiently dried and the inside thereof was replaced with nitrogen. To the pressure-resistant reaction vessel made of a metal, 154.5 parts of cyclohexane, 42.8 parts of a cyclohexane solution containing dicyclopentadiene (endo isomer content of 99% or more) in a concentration of 70% (30 parts as an amount of dicyclopentadiene), and 1.9 parts of 1-hexene were added, and the mixture was heated to 53°C.

0.061 parts of an n-hexane solution containing diethylaluminum ethoxide in a concentration of 19% was added to a solution prepared by dissolving 0.014 parts of a tetrachloro tungsten phenylimide(tetrahydrofuran) complex in 0.70 parts of toluene, and the mixture was stirred for 10 minutes to prepare a catalyst solution.

The catalyst solution was added to the pressure-resistant reaction vessel to initiate a ring-opening polymerization reaction. Subsequently, the reaction was performed for 4 hours while the temperature was maintained at 53°C to obtain a solution of a ring-opened polymer of dicyclopentadiene.

The number-average molecular weight (Mn) and the weight-average molecular weight (Mw) of the obtained ring-opened polymer of dicyclopentadiene were 8,750 and 28,100, respectively, and the molecular weight distribution (Mw/Mn) calculated therefrom was 3.21.

To 200 parts of the obtained solution of the ring-opened polymer of dicyclopentadiene, 0.037 parts of 1,2-ethanediol as a terminator was added. The mixture was heated to 60°C and stirred for 1 hour, to terminate the polymerization reaction. To the mixture, 1 part of a hydrotalcite-like compound ("KYOWAAD (registered trademark) 2000" available from Kyowa Chemical Industry Co., Ltd.) was added. The mixture was heated to 60°C and stirred for 1 hour. Subsequently, 0.4 parts of a filtration aid ("RADIOLITE (registered trademark) #1500" available from Showa Chemical Industry Co., Ltd.) was added, and the mixture was filtered through a PP pleats cartridge filter ("TCP-HX" available from Advantec Toyo Kaisha, Ltd.) to separate the adsorbent and the solution.

To 200 parts of the filtered solution of the ring-opened polymer of dicyclopentadiene (amount of the polymer: 30 parts), 100 parts of cyclohexane was added. 0.0043 parts of chlorohydridecarbonyl tris(triphenylphosphine) ruthenium was then added, and a hydrogenation reaction was performed at a hydrogen pressure of 6 MPa and 180°C for 4 hours. As a result, a reaction solution containing a hydrogenated product of the ring-opened polymer of dicyclopentadiene was obtained. The reaction solution was a slurry solution in which the hydrogenated products were precipitated.

The hydrogenated products contained in the reaction liquid were separated from the solution using a centrifugal separator, and dried under reduced pressure at 60°C for 24 hours to obtain 28.5 parts of the hydrogenated products of the ring-opened polymer of dicyclopentadiene having crystallizability. The hydrogenated products had a hydrogenation ratio of 99% or more, a glass transition temperature (Tg) of 95°C, a melting point (Tm) of 262°C, and a ratio of racemo diads of 89%.

### [Example 1]

### (1-1. Production of Pre-stretch film)

To 100 parts of the hydrogenated products of the ring-opened polymer of dicyclopentadiene obtained in Production Example 1, 1.1 parts of an antioxidant (tetrakis[methylene-3-(3',5'-di-t-butyl-4'-hydroxyphenyl)propionate]methane; "Irganox (registered trademark) 1010" manufactured by BASF Japan Ltd.) was added to obtain a resin serving as a material for the film.

The resin descried above was put into a twin-screw extruder ("TEM-37B" manufactured by Toshiba Machine Co., Ltd.) provided with four die holes each having an inner diameter of 3 mmφ. The resin was molded by hot melt extrusion molding using the twin-screw extruder, to obtain a molded article in a strand shape. The molded article was finely cut using a strand cutter to obtain resin pellets. The operation conditions of the twin-screw extruder are as follows.
- Barrel setting temperature: 270°C to 280°C.
- Die setting temperature: 250°C.
- Screw rotation speed: 145 rpm
- Feeder rotation speed: 50 rpm

Subsequently, the pellets obtained were supplied to a hot melt extrusion film-molding machine equipped with a T-die. A long-length pre-stretch film (thickness of 100 µm) formed of the above-mentioned resin was produced using the film-molding machine by a method in which the film was wound into a roll at a take-up speed of 2 m/min. The operation conditions of the film-molding machine are as follows.
- Barrel setting temperature: 280°C to 290°C.
- Die temperature: 270°C.
- Screw rotation speed: 30 rpm

### (1-2. Production of stretched film)

A tenter stretching machine including clips capable of holding two sides of the long-length pre-stretch film at end parts in a width direction was prepared. The long-length pre-stretch film was supplied to the above-mentioned tenter stretching machine and subjected to a uniaxial stretching treatment in which the two sides of the pre-stretch film at the end parts in the width direction thereof were held by the clips and pulled apart in the width direction. The stretching was performed under conditions of a stretching temperature of 100°C and a stretching ratio of 2.0 times. A stretched film was thus obtained.

### (1-3. Heating treatment)

The stretched film was subjected to a heating treatment while being conveyed in a strained state by holding the two sides of the stretched film at the end parts in the width direction thereof with the clips of the tenter stretching machine. The heating treatment was performed under conditions of a treating temperature of 200°C and a treating time of 20 minutes. The crystallization of the alicyclic structure-containing polymer contained in the stretched film was advanced by this treatment and a long-length resin film having a thickness of 50 µm was thus obtained.

The end parts, which were held by the clips, of the resin film thus obtained was removed by cutting and the remaining part was evaluated for the crystallinity degree of the polymer, the plane orientation coefficient Δne, the folding endurance, the water-absorption rate, the heat resistant temperature, and the smoothness by the methods described above.

### [Example 2]

In the step (1-1) described above, the thickness of the pre-stretch film was adjusted so as to obtain the resin film having the thickness of 50 µm.

Further, in the step (1-2) described above, the stretched film was produced by subjecting the pre-stretch film to the simultaneous biaxial stretching treatment where the stretching was performed not only in the width direction, but also in the longitudinal direction. The stretching was performed under the conditions of the stretching temperature of 100°C, the stretching ratio in the width direction of 2.0 times, and the stretching ratio in the longitudinal direction of 2.0 times.

The resin film was produced and evaluated in the same manner as in Example 1 except for the above-described matters.

### [Comparative Example 1]

In the step (1-1) described above, the thickness of the pre-stretch film was adjusted so as to obtain the stretched film having the thickness of 50 µm.

Further, the step (1-3) described above was omitted.

The stretched film, which was a resin film not subjected to the heating treatment, was produced and evaluated in the same manner as in Example 1 except for the above-described matters.

### [Comparative Example 2]

In the step (1-1) described above, the thickness of the pre-stretch film was adjusted so as to obtain the stretched film having the thickness of 50 µm.

Further, in the step (1-2) described above, the stretched film was produced by subjecting the pre-stretch film to the simultaneous biaxial stretching treatment where the stretching was performed not only in the width direction, but also in the longitudinal direction. The stretching was performed under the conditions of the stretching temperature of 100°C, the stretching ratio in the width direction of 2.0 times, and the stretching ratio in the longitudinal direction of 2.0 times.

Further, the step (1-3) described above was omitted.

The stretched film, which was a resin film not subjected to the heating treatment, was produced and evaluated in the same manner as in Example 1 except for the above-described matters.

### [Comparative Example 3]

In the step (1-1) described above, the thickness of the pre-stretch film was adjusted to 50 µm.

Further, the step (1-2) and step (1-3) described above were omitted.

The pre-stretch film, which was a resin film not subjected to the stretching treatment and the heating treatment, was produced and evaluated in the same manner as in Example 1 except for the above-described matters.

### [Comparative Example 4]

In the step (1-1) described above, the take-up speed was doubled without changing the extruding conditions. Further, the step (1-2) and step (1-3) described above were omitted.

The pre-stretch film, which was a resin film not subjected to the stretching treatment and the heating treatment, was produced and evaluated in the same manner as in Example 1 except for the above-described matters.

### [Comparative Example 5]

In the step (1-1) described above, a polyethylene terephthalate resin was used as a resin material of the film.

Further, in the step (1-1) described above, the thickness of the pre-stretch film was adjusted so as to obtain the resin film having the thickness of 50 µm.

Further, in the step (1-2) described above, the stretched film was produced by subjecting the pre-stretch film to the simultaneous biaxial stretching treatment where the stretching was performed not only in the width direction, but also in the longitudinal direction. In this Comparative Example, the stretching was performed under the conditions of the stretching temperature of 120°C, the stretching ratio in the width direction of 2.0 times, and the stretching ratio in the longitudinal direction of 2.0 times.

The resin film was produced and evaluated in the same manner as in Example 1 except for the above-described matters.

### [Comparative Example 6]

In the step (1-1) described above, a cyclic olefin resin having no crystallizability ("ZEONOR" manufactured by ZEON Corporation, glass transition temperature of 120°C) was used as a resin material of the film.

Further, in the step (1-1) described above, the thickness of the pre-stretch film was adjusted to 50 µm.

Further, the step (1-2) and step (1-3) described above were omitted.

The pre-stretch film, which was a resin film not subjected to the stretching treatment and the heating treatment, was produced and evaluated in the same manner as in Example 1 except for the above-described matters.

### [Comparative Example 7]

In the step (1-1) described above, a cyclic olefin resin having no crystallizability ("ZEONOR" manufactured by ZEON Corporation, glass transition temperature of 120°C) was used as a resin material of the film.

Further, in the step (1-1) described above, the thickness of the pre-stretch film was adjusted so as to obtain the stretched film having the thickness of 50 µm.

Further, in the step (1-2) described above, the stretched film was produced by subjecting the pre-stretch film to the simultaneous biaxial stretching treatment where the stretching was performed not only in the width direction, but also in the longitudinal direction. In this Comparative Example, the stretching was performed under the conditions of the stretching temperature of 120°C, the stretching ratio in the width direction of 2.0 times, and the stretching ratio in the longitudinal direction of 2.0 times.

Further, the step (1-3) described above was omitted.

The stretched film, which was a resin film not subjected to the heating treatment, was produced and evaluated in the same manner as in Example 1 except for the above-described matters.

### [Comparative Example 8]

In the step (1-1) described above, an ethylene-norbornene addition copolymer resin having no crystallizability was used as a resin material of the film.

Further, in the step (1-1) described above, the thickness of the pre-stretch film was adjusted to 50 µm.

Further, the step (1-2) and step (1-3) described above were omitted.

The pre-stretch film, which was a resin film not subjected to the stretching treatment and the heating treatment, was produced and evaluated in the same manner as in Example 1 except for the above-described matters.

### [Comparative Example 9]

In the step (1-1) described above, a polycarbonate resin ("WONDERLITE PC-115" manufactured by Asahi Kasei Corp., glass transition temperature of 145°C) was used as a resin material of the film.

Further, in the step (1-1) described above, the thickness of the pre-stretch film was adjusted so as to obtain the stretched film having the thickness of 50 µm.

Further, in the step (1-2) described above, the stretched film was produced by subjecting the pre-stretch film to the simultaneous biaxial stretching treatment where the stretching was performed not only in the width direction, but also in the longitudinal direction. In this Comparative Example, the stretching was performed under the conditions of the stretching temperature of 150°C, the stretching ratio in the width direction of 2.0 times, and the stretching ratio in the longitudinal direction of 2.0 times.

Further, the step (1-3) described above was omitted.

The stretched film, which was a resin film not subjected to the heating treatment, was produced and evaluated in the same manner as in Example 1 except for the above-described matters.

### [Comparative Example 10]

In the step (1-1) described above, the thickness of the pre-stretch film was adjusted so as to obtain the resin film having the thickness of 50 µm.

Further, the step (1-2) described above was omitted. Thus, the pre-stretch film was used in place of the stretched film in the step (1-3) described above.

The resin film not subjected to the stretching treatment was produced and evaluated in the same manner as in Example 1 except for the above-described matters.

### [Results]

Summary of the procedures of Examples and Comparative Examples is shown in Table 1 and their results are shown in Table 2. Abbreviations used in the Tables below mean as follows.
PDCPD: Hydrogenated product of ring-opened polymer of dicyclopentadiene
PET: Polyethylene terephthalate
COP: Cyclic olefin polymer
COC: Cyclic olefin copolymer
PC: Polycarbonate
Δne: Plane orientation coefficient

**[Table 1. Summary of Procedures of Examples and Comparative Examples]**

| | | Stretching conditions | | | Heating conditions | |
|---|---|---|---|---|---|---|
| | Polymer | Stretching style | Stretching temperature (°C) | Stretching ratio (times) | Temperature (°C) | Time (min.) |
| Ex. 1 | PDCPD | Uniaxial stretching | 100 | 2 | 200 | 20 |
| Ex. 2 | PDCPD | Biaxial stretching | 100 | 2×2 | 200 | 20 |
| Comp. Ex. 1 | PDCPD | Uniaxial stretching | 100 | 2 | No | heating |
| Comp. Ex. 2 | PDCPD | Biaxial stretching | 100 | 2×2 | No | heating |
| Comp. Ex. 3 | PDCPD | | No stretching | | No | heating |
| Comp. Ex. 4 | PDCPD | Take-up stretching by cast roll | | | No | heating |
| Comp. Ex. 5 | PET | Biaxial stretching | 120 | 2×2 | 200 | 20 |
| Comp. Ex. 6 | COP | | No stretching | | No | heating |
| Comp. Ex. 7 | COP | Biaxial stretching | 120 | 2×2 | No | heating |
| Comp. Ex. 8 | COC | | No stretching | | No | heating |
| Comp. Ex. 9 | PC | Biaxial stretching | 150 | 2×2 | No | heating |
| Comp. Ex. 10 | PDCPD | | No stretching | | 200 | 20 |

**[Table 2. Results of Examples and Comparative Examples]**

| | Crystallinity degre e (%) | Thickness (µm) | Δne | | Property | Evaluations | |
|---|---|---|---|---|---|---|---|
| | | | | Smoothness | Folding endurance | Water-absorption rate | Heat-resistant temperature |
| Ex. 1 | 21 | 50 | 0.011 | Good | Good | Good | Good |
| Ex. 2 | 22 | 50 | 0.016 | Good | Good | Good | Good |
| Comp. Ex. 1 | 4 | 50 | 0.005 | Good | Good | Good | Poor |
| Comp. Ex. 2 | 4 | 50 | 0.007 | Good | Good | Good | Poor |
| Comp. Ex. 3 | 4 | 50 | 0.001 or less | Good | Poor | Good | Poor |
| Comp. Ex. 4 | 17 | 50 | 0.001 or less | Good | Poor | Good | Good |
| Comp. Ex. 5 | 30 | 50 | 0.103 | Good | Good | Poor | Good |
| Comp. Ex. 6 | 0 | 50 | 0.001 or less | Good | Poor | Good | Poor |
| Comp. Ex. 7 | 0 | 50 | 0.007 | Good | Poor | Good | Poor |
| Comp. Ex. 8 | 0 | 50 | 0.001 or less | Good | Good | Good | Poor |
| Comp. Ex. 9 | 0 | 50 | 0.023 | Good | Good | Poor | Poor |
| Comp. Ex. 10 | 20 | 50 | 0.001 or less | Good | Poor | Good | Good |

### [Discussion]

As evident from Table 1 and Table 2, the resin films in Examples 1 and 2 produced good results in all of the folding endurance, the water-absorption rate, and the heat resistant temperature. Thus, these results confirmed that the present invention can achieve a resin film excellent in all of the folding resistance, the low water-absorption property, and the heat resistance.

### [Reference Signs List]

- 110:: surface plate
- 110U:: supporting face
- 120:: test piece
- 130:: weight
- 140:: weight

## Claims

1. A resin film formed of a resin containing an alicyclic structure-containing polymer having crystallizability, the resin film having:
a folding endurance of 2,000 times or more, determined as described in the specification;
a water-absorption rate of 0.1% or less, determined as described in the specification;
a heat-resistant temperature of 180°C or higher, determined as described in the specification;
a crystallinity degree of the alicyclic structure-containing polymer of 10% or more, determined by X-ray diffraction; and
an absolute value |Δne| of a plane orientation coefficient Δne of 0.01 or more; wherein,
Δne is represented by a formula "Δne = (nx + ny)/2 - nz", and
nx represents a refractive index in a direction in which the maximum refractive index is given among in-plane directions perpendicular to a thickness direction of the resin film, ny represents a refractive index in a direction perpendicular to the direction giving nx among the in-plane directions of the resin film, and nz represents a refractive index in the thickness direction of the resin film.

2. A resin film formed of a resin containing an alicyclic structure-containing polymer having crystallizability, the resin film having:
a crystallinity degree of the alicyclic structure-containing polymer of 10% or more, determined by X-ray diffraction;
a folding endurance of 2,000 times or more, determined as described in the specification;
a water-absorption rate of 0.1% or less, determined as described in the specification;
a smooth surface, determined as described in the specification; and
an absolute value |Δne| of a plane orientation coefficient Δne of 0.01 or more; wherein,
Δne is represented by a formula "Δne = (nx + ny)/2 - nz", and
nx represents a refractive index in a direction in which the maximum refractive index is given among in-plane directions perpendicular to a thickness direction of the resin film, ny represents a refractive index in a direction perpendicular to the direction giving nx among the in-plane directions of the resin film, and nz represents a refractive index in the thickness direction of the resin film.

3. A method for producing the resin film according to any one of claims 1 or 2, comprising:
a first step of stretching a pre-stretch film formed of a resin containing an alicyclic structure-containing polymer having crystallizability to obtain a stretched film; and
a second step of heating the stretched film after the first step to obtain the resin film according to any one of claims 1 or 2.

4. The method for producing the resin film according to claim 3, wherein, in the second step, the stretched film is heated in a strained state where at least two sides of the stretched film are held.

## Patentansprüche

1. Eine Harzfolie gebildet aus einem Harz enthaltend ein Polymer mit Kristallisierbarkeit enthaltend eine alizyklische Struktur, die Harzfolie aufweisend:
eine Faltungsbelastbarkeit von 2000 Mal oder mehr, bestimmt wie in der Beschreibung beschrieben;
eine Wasserabsorptionsrate von 0,1% oder weniger, bestimmt wie in der Beschreibung beschrieben;
eine Wärmebeständigkeitstemperatur von 180°C oder höher, bestimmt wie in der Beschreibung beschrieben;
einen Kristallinitätsgrad des Polymers enthaltend die alizyklische Struktur von 10% oder mehr, bestimmt mittels Röntgenbeugung; und
einen absoluten Wert |Δne| eines Ebenen-Orientierungs Koeffizienten Δne von 0,01 oder mehr;
wobei
Δne wiedergegeben wird durch die Formel "Δne = (nx + ny) / 2 - nz", und
nx steht für einen Brechungsindex in einer Richtung, in der der maximale Brechungsindex gegeben ist unter den in-Ebenen Richtungen senkrecht zu einer Dickenrichtung der Harzfolie, ny steht für einen Brechungsindex in einer Richtung senkrecht zu der nx ergebenden Richtung unter den in-Ebenen Richtungen der Harzfolie, und nz steht für einen Brechungsindex in der Dickenrichtung der Harzfolie.

2. Eine Harzfolie gebildet aus einem Harz enthaltend ein Polymer mit Kristallisierbarkeit enthaltend eine alizyklische Struktur, die Harzfolie aufweisend:
einen Kristallinitätsgrad des Polymers mit alizyklischer Struktur von 10% oder mehr, bestimmt mittels Röntgenbeugung;
eine Faltungsbelastbarkeit von 2000 Mal oder mehr, bestimmt wie in der Beschreibung beschrieben;
eine Wasserabsorptionsrate von 0,1% oder weniger, bestimmt wie in der Beschreibung beschrieben;
eine glatte Oberfläche, bestimmt wie in der Beschreibung beschrieben; und
einen absoluten Wert |Δne| eines Ebenen-Orientierungs Koeffizienten Δne von 0,01 oder mehr;
wobei
Δne wiedergegeben wird durch die Formel "Δne = (nx + ny) / 2 - nz", und
nx steht für einen Brechungsindex in einer Richtung, in der der maximale Brechungsindex gegeben ist unter den in-Ebenen Richtungen senkrecht zu einer Dickenrichtung der Harzfolie, ny steht für einen Brechungsindex in einer Richtung senkrecht zu der nx ergebenden Richtung unter den in-Ebenen Richtungen der Harzfolie, und nz steht für einen Brechungsindex in der Dickenrichtung der Harzfolie.

3. Ein Verfahren zur Herstellung einer Harzfolie gemäß einem der Ansprüche 1 oder 2, umfassend:
einen ersten Schritt des Streckens einer vorgestreckten Folie gebildet aus einem Harz enthaltend ein Polymer mit Kristallisierbarkeit enthaltend eine alizyklische Struktur, um eine gestreckte Folie zu erhalten; und
einen zweiten Schritt des Erwärmens der gestreckten Folie nach dem ersten Schritt, um die Harzfolie gemäß einem der Ansprüche 1 oder 2 zu erhalten.

4. Das Verfahren zur Herstellung der Harzfolie gemäß Anspruch 3, wobei im zweiten Schritt die gestreckte Folie in einem gespannten Zustand erhitzt wird, wobei mindestens zwei Seiten der gestreckten Folie gehalten werden.

## Revendications

1. Film de résine formé d'une résine contenant un polymère contenant une structure alicyclique ayant une aptitude à la cristallisation, le film de résine ayant :
une endurance au pliage de 2 000 fois ou plus, déterminée tel que décrit dans la description ;
un taux d'absorption d'eau de 0,1 % ou moins, déterminé tel que décrit dans la description ;
une température de résistance à la chaleur de 180 °C ou supérieure, déterminée tel que décrit dans la description ;
un degré de cristallinité du polymère contenant une structure alicyclique de 10 % ou plus, déterminé par diffraction des rayons X ; et
une valeur absolue |Δne| d'un coefficient d'orientation de plan Δne de 0,01 ou plus ; dans lequel,
Δne est représenté par une formule « Δne = (nx + ny)/2 - nz », et
nx représente un indice de réfraction dans une direction dans laquelle l'indice de réfraction maximal est donné parmi les directions dans le plan perpendiculaires à une direction de l'épaisseur du film de résine, ny représente un indice de réfraction dans une direction perpendiculaire à la direction donnant nx parmi les directions dans le plan du film de résine, et nz représente un indice de réfraction dans la direction de l'épaisseur du film de résine.

2. Film de résine formé d'une résine contenant un polymère contenant une structure alicyclique ayant une aptitude à la cristallisation, le film de résine ayant :
un degré de cristallinité du polymère contenant une structure alicyclique de 10 % ou plus, déterminé par diffraction des rayons X ;
une endurance au pliage de 2 000 fois ou plus, déterminée tel que décrit dans la description ;
un taux d'absorption d'eau de 0,1 % ou moins, déterminé tel que décrit dans la description ;
une surface lisse, déterminée tel que décrit dans la description ; et
une valeur absolue |Δne| d'un coefficient d'orientation de plan Δne de 0,01 ou plus ; dans lequel,
Δne est représenté par une formule « Δne = (nx + ny)/2 - nz », et
nx représente un indice de réfraction dans une direction dans laquelle l'indice de réfraction maximal est donné parmi les directions dans le plan perpendiculaires à une direction de l'épaisseur du film de résine, ny représente un indice de réfraction dans une direction perpendiculaire à la direction donnant nx parmi les directions dans le plan du film de résine, et nz représente un indice de réfraction dans la direction de l'épaisseur du film de résine.

3. Procédé de production du film de résine selon l'une quelconque des revendications 1 ou 2, comprenant :
une première étape d'étirage d'un film pré-étiré formé d'une résine contenant un polymère contenant une structure alicyclique ayant une aptitude à la cristallisation pour obtenir un film étiré ; et
une seconde étape de chauffage du film étiré après la première étape pour obtenir le film de résine selon l'une quelconque des revendications 1 ou 2.

4. Procédé de production du film de résine selon la revendication 3, dans lequel, dans la seconde étape, le film étiré est chauffé dans un état sous contrainte où au moins deux côtés du film étiré sont maintenus.
